# EUROPÄISCHE PATENTANMELDUNG

(11) **EP 3 531 064 A1**
(43) Veröffentlichungstag der Anmeldung: **28.08.2019**
(21) Anmeldenummer: 18158804.7
(22) Anmeldetag: 27.02.2018
(51) Int. Cl.: G01B 9/02

(54) **STRAHLENFÜHRUNG IM INTERFEROMETER**

(71) Anmelder: METROHM AG, 9100 Herisau (CH)
(72) Erfinder: Gisler, Thomas, 9113 Degersheim (CH)
(74) Vertreter: Hepp Wenger Ryffel AG

(57) **Zusammenfassung**

Die Erfindung betrifft ein Referenzinterferometer (1) zur Bestimmung einer optischen Weglängenänderung, insbesondere einer relativen optischen Weglängenänderung in Interferometerarmen (2), umfassend einen Strahlteiler (3) und eine Laserlichtquelle (4), wobei der Strahlteiler (3) derart ausgebildet ist, dass ein Lichtstrahl (5) der Laserlichtquelle (4) mittels totaler interner Reflexion über eine erste Seitenfläche, insbesondere eine Oberseite (61), und eine zweite Seite, insbesondere eine Unterseite (62), des Strahlteilers (3) führbar ist, **dadurch gekennzeichnet, dass** dem Strahlteiler (3) im Strahlengang ein Prisma (16') vorgelagert ist, mit welchem der in den Strahlteiler (1) eintretende Lichtstrahl (5) umgelenkt werden kann, und/oder dadurch gekennzeichnet, dass dem Strahlteiler (3) im Strahlengang ein Prisma (16") nachgelagert ist, mit welchem der aus dem Strahlteiler (3) austretende Lichtstrahl (5') umgelenkt werden kann. Ausserdem betrifft die Erfindung ein Interferometer, ein Spektrometer und ein Verfahren zur Bestimmung einer optischen Weglängenänderung basierend auf dem erfindungsgemässen Referenzinterferometer.

## Beschreibung

Die Erfindung betrifft ein Referenzinterferometer zur Bestimmung einer optischen Weglängenänderung, insbesondere einer relativen optischen Weglängenänderung in Interferometerarmen, umfassend einen Strahlteiler und eine Laserlichtquelle.

Weiter betrifft die Erfindung eine Verwendung eines solchen Referenzinterferometers.

Des Weiteren betrifft die Erfindung ein Interferometer mit einem solchen Referenzinterferometer sowie ein Spektrometer, insbesondere ein Nah-Infrarot-Spektrometer, mit einem derartigen Interferometer.

Ferner betrifft die Erfindung ein Verfahren zur Bestimmung einer optischen Weglängenänderung, insbesondere einer relativen optischen Weglängenänderung in Interferometerarmen, wobei von einer Laserlichtquelle ein Lichtstrahl, insbesondere ein Referenzstrahl auf einen Strahlteiler gestrahlt wird.

Zweistrahlinterferometer, wie sie beispielsweise in Fourier-Transformationsspektrometern eingesetzt werden, benötigen in der Regel ein Referenzinterferometer zur Messung eines Weglängenunterschieds von zwei Lichtstrahlen in den Interferometerarmen.

Zur Messung der relativen optischen Weglängenänderung wird oftmals eine sogenannte Quadraturdetektion verwendet, um neben einem Betrag der optischen Weglängenänderung in den Interferometerarmen auch deren Vorzeichen erfassen zu können. Quadraturdetektion wird in vielen kommerziell erhältlichen Zweistrahlinterferometern verwendet. Hierfür werden zwei Referenzinterferometer realisiert, wobei sich ein optischer Weglängenunterschied in beiden Interferometerarmen um etwa λ/4 ergibt. Die Messung von beiden Interferenzsignalen erlaubt neben einer Bestimmung des Betrages der optischen Weglängenänderung zusätzlich auch die Bestimmung des Vorzeichens derselben. Eine Quadraturdetektion kann beispielsweise durch zwei räumlich getrennte Interferometer realisiert werden.

Eine andere Realisierungsmöglichkeit ist ein Einbringen eines λ/4-Plättchens in einen Referenzlaserstrahl in einem Interferometerarm, wodurch sich ein passender optischer Weglängenunterschied für s- und p-polarisiertes bzw. senkrecht und parallel polarisiertes Licht ergibt. Eine Detektion der Laserstrahlen erfolgt dann über einen Polarisationsstrahlteiler und zwei Detektoren.

Da es sich schwierig gestaltet, eine einfache Quadraturdetektion insbesondere in einem monolithischen Interferometeraufbau zu realisieren, insbesondere ein retardierendes Element wie ein λ/4-Plättchen in einem Arm des Interferometers zu integrieren, wurde bereits ein Interferometeraufbau vorgeschlagen, der monolithisch ist und mit dem eine optische Weglängenänderung dennoch einfach und effizient bestimmbar ist. Ein solcher Aufbau wird in der Anmeldung EP17205704.4 offenbart.

Die Lehre der Anmeldung EP17205704.4 wird hiermit durch Bezugnahme in die vorliegende Beschreibung eingeschlossen. EP17205704.4 zeichnet sich dadurch aus, dass die Phasenverschiebung zwischen den s- und p-polarisierten Anteilen des Referenzstrahls nicht durch ein λ/4-Plättchen realisiert wird, sondern durch Umlenken des Strahls auf eine mit HfO2 beschichtete Oberresp. Unterseite des Referenzinterferometers. An einer Grenzfläche zwischen der Hafniumdioxid-Schicht und der Luft findet Totalreflexion statt, welche mit einer bestimmten Phasenverschiebung zwischen senkrecht und parallel polarisiertem (s- und p-polarisiertem) Licht einhergeht.

Auch diese Ausführungsform weist jedoch weiterhin Nachteile auf. Der Referenzstrahl bzw. beide Teile des geteilten Referenzstrahls sollen via eine Ober- bzw. Unterseite des Interferometers auf die Spiegelfläche der Interferometer-Arme gelenkt werden. Deshalb können die zugehörigen Lichtquellen nicht in der Ebene, welche durch die optischen Achsen des einfallenden bzw. aus dem Interferometer austretenden Nutzstrahls aufgespannt wird, ausgerichtet werden. Da der Lichtstrahl auf die Oberresp. Unterseite des Strahlteilers gelenkt werden soll, wird die die Lichtquelle schräg ausgerichtet, so dass die Ausbreitungsrichtung des austretenden Lichtstrahls nicht direkt auf ein Spiegelelement zuläuft, sondern hinsichtlich des Nutzstrahls verkippt ist. Dadurch ergibt sich ein höherer Aufwand zur Ausrichtung des Referenzstrahls und erhöhter Platzbedarf beim Aufbau der Apparatur.

Es ist daher das Ziel der vorliegenden Erfindung, ein Referenzinterferometer vorzuschlagen, welches die oben genannten Nachteile überwindet. Insbesondere soll ein noch kompakteres und robusteres Referenzinterferometer erhältlich gemacht werden.

Weiter ist es ein Ziel, eine Verwendung eines solchen Referenzinterferometers anzugeben.

Ein weiteres Ziel ist es, ein Interferometer mit einem solchen Referenzinterferometer sowie ein Spektrometer mit einem derartigen Interferometer anzugeben.

Ferner ist es ein Ziel, ein Verfahren der eingangs genannten Art anzugeben, mit welchem eine optische Weglängenänderung einfach und effizient bestimmt werden kann.

Die Aufgabe wird erfindungsgemäss dadurch gelöst, dass bei einem Referenzinterferometer der eingangs genannten Art der Strahlteiler derart ausgebildet ist, dass ein Lichtstrahl der Laserlichtquelle mittels totaler interner Reflexion über eine erste Seitenfläche, insbesondere eine Oberseite, und eine zweite Seitenfläche, insbesondere eine Unterseite, des Strahlteilers führbar ist und dass dem Strahlteiler im Strahlengang ein Prisma vorgelagert ist, mit welchem der auf das Prisma treffende Lichtstrahl umgelenkt werden kann, und/oder dadurch gekennzeichnet, dass dem Strahlteiler im Strahlengang ein Prisma nachgelagert ist, mit welchem der aus dem Strahlteiler austretende Lichtstrahl umgelenkt werden kann.

Ein mit der Erfindung erzielter Vorteil ist insbesondere darin zu sehen, dass durch die interne Totalreflexion an einer Grenzfläche eine Phasenverschiebung zwischen x- und y-polarisiertem bzw. senkrecht (s-) und parallel (p-) polarisiertem Licht entsteht, wobei die Phasenverschiebung von einer Brechzahl des Strahlteilers und einem Auftreffwinkel des Lichtstrahles abhängt. Dabei muss der Auftreffwinkel nicht zwingend durch eine Positionierung der Lichtquelle und/oder des Detektors schräg zur xz-Ebene bewirkt werden, sondern er kann durch den gezielten Einsatz von Prismen platzsparend und präzise eingestellt werden.

Wenn das Referenzinterferometer in ein Interferometer integriert ist, in welchem ein Nutzstrahl über die gleichen Spiegelelemente - jedoch nicht über die Seitenflächen des Strahlteilers - geführt wird, ergeben sich weitere Vorteile hinsichtlich Kosteneffizienz und Präzision. Weitere Ausführungen werden nachstehend im Detail beschrieben.

Der Einsatz von Prismen hat den Vorteil, dass der Einfallswinkel des Lichtstrahls der Referenzlichtquelle auf den Strahlteiler frei gewählt und bei Bedarf auch angepasst werden kann, ohne dass dafür die Ausrichtung der Lichtquelle und/oder des wenigstens einen Detektors und/oder Polarisationsstrahlteilers geändert werden müsste.

Für die detaillierte Beschreibung der Erfindung gelten die nachfolgenden Definitionen:
Die zentrale z-Achse ist die Flächennormale zur Spiegelfläche eines ersten Spiegelelements, insbesondere durch deren Mitte, in einem ersten Interferometerarm.

Die zentrale x-Achse ist die Flächennormale zur Spiegelfläche eines zweiten Spiegelelements, insbesondere durch deren Mitte, in einem zweiten Interferometerarm.

Wenigstens eines der Spiegelelemente ist beweglich verstellbar. Das erste Spiegelelement kann entlang der zentralen z-Achse, das zweite Spiegelelement kann entlang der zentralen x-Achse bewegbar sein. Die Ausrichtung der Spiegelflächen erfährt aber keine Kippung. Auch werden die Spiegelelemente nicht verschoben in einer anderen Richtung als der z-Richtung für das erste Spiegelelement oder in einer anderen als der x-Richtung für das zweite Spiegelelement. Die zentrale z-Achse und die zentrale x-Achse schneiden sich stets an der Strahlteilerschicht.

Besonders bevorzugt ist die Ausrichtung der optischen Achse der Referenzlichtquelle auf der zentralen z-Achse oder parallel zur zentralen z-Achse. Dadurch ist ein besonders einfaches und robustes Referenzinterferometer erhältlich, welches darüber hinaus mit relativ wenig Aufwand produziert werden kann. Die Strahlausbreitung im Referenzinterferometer unmittelbar nach der Lichtquelle erfolgt in dieser bevorzugten Ausführung auf der zentralen z-Achse. Dies macht die Herstellung des Interferometers einfach, präzis und günstig.

Durch ein dem Strahlteiler vorgelagertes Prisma wird der Strahl sodann gebrochen und schräg von der z-Achse weg gelenkt, um in dem gewünschten Einfallswinkel auf die beschichtete oder unbeschichtete Seitenfläche des Strahlteilers zu treffen. Dadurch kann eine einfache und kompakte Bauweise realisiert werden und der Lichtstrahl trifft in einem für die totale interne Reflexion geeigneten Winkel auf die Seitenfläche. Bei Bedarf kann der Brechungswinkel durch Austauschen des Prismas einfach und rasch geändert werden.

Das erste Prisma kann an den Strahlteiler geklebt, gekittet oder auf andere Weise vor dem Strahlteiler angeordnet oder befestigt werden. Das Prisma kann einstückig mit dem Strahlteiler ausgebildet sein. Der Effekt der Lichtbrechung kann auch dadurch erzielt werden, dass die Fläche, durch welche der Strahl in den Strahlteiler eintritt, so ausgebildet ist, dass sie zur optischen Achse des Referenzlichtstrahls in einem anderen als einem 90° Winkel steht. In diesem Fall ist unter dem Begriff Prisma der Teilbereich des Strahlteilers mit der abgeschrägten Fläche zu verstehen. Besonders bevorzugt wird ein gerades dreiseitiges Prisma oder ein gerades Prisma mit trapezoidaler Grundfläche verwendet. Bevorzugt werden für das Prisma Materialien gewählt, die hinreichend transparent für die Wellenlänge des Referenzlichtstrahls sind, beispielsweise kann das Prisma aus synthetischem Quarzglas gefertigt sein.

Zusätzlich oder alternativ zum Prisma, welches im Strahlengang dem Strahlteiler vorgelagert ist, kann ein Prisma im Strahlengang dem Strahlteiler nachgelagert sein. Denn der Referenzstrahl, welcher an einer ersten Seitenfläche des Strahlteilers, bevorzugt an der Oberseite, totalreflektiert wird und via ein Spiegelelement über eine zweite Seite des Strahlteilers, bevorzugt über die Unterseite, erneut totalreflektiert wird, verläuft beim Austritt aus dem Strahlteiler nicht entlang der zentralen x-Achse oder parallel zur zentralen x-Achse. Um die Fläche eines wenigstens einen Detektors für den Referenzstrahl dennoch parallel zur Seitenfläche des Strahlteilers positionieren zu können, kann ein zweites Prisma eingesetzt werden. Durch das zweite Prisma kann der schräg zur zentralen x Achse verlaufende Lichtstrahl so gebrochen werden, dass er nach Austritt aus dem Prisma auf der zentralen x-Achse oder parallel zur zentralen x-Achse verläuft. Dadurch kann eine einfache und kompakte Bauweise realisiert werden und der Lichtstrahl kann dennoch lotrecht auf eine parallel zur zentralen z-Achse resp. parallel zur Seitenfläche des Strahlteilers ausgerichtete Detektorfläche treffen. Bei Bedarf kann der Brechungswinkel durch Austauschen des Prismas einfach und rasch geändert werden.

Analog zum ersten Prisma kann auch das zweite Prisma an den Strahlteiler geklebt, gekittet oder auf andere Weise im Strahlengang nach dem Strahlteiler angeordnet oder befestigt werden. Das Prisma kann einstückig mit dem Strahlteiler ausgebildet sein. Der Effekt der Lichtbrechung kann auch dadurch erzielt werden, dass die Fläche, durch welche der Strahl aus dem Strahlteiler austritt, so ausgebildet ist, dass sie zur optischen Achse des Lichtsstrahls in einem anderen als einem 90° Winkel steht. In diesem Fall ist unter dem Begriff Prisma der Teilbereich des Strahlteilers mit der abgeschrägten Fläche zu verstehen. Es kann ein einzelnes oder mehrere Prismen eingesetzt werden. Besonders bevorzugt ist ein gerades dreiseitiges Prisma oder ein gerades Prisma mit trapezoidaler Grundfläche. Bevorzugte Materialien sind hinreichend transparent für die Wellenlänge der Referenzlichtquelle. Das Prisma kann zum Beispiel aus synthetischem Quarzglas gefertigt sein.

Bevorzugterweise ist wenigstens eines der Prismen mit einer Antireflexbeschichtung versehen, welche angepasst ist auf die Wellenlänge der Referenzlichtquelle.

Der Lichtstrahl ist insbesondere als Laserlichtstrahl ausgebildet, welcher von der Laserlichtquelle emittiert wird.

Günstig ist es, wenn zumindest die Oberseite und/oder die Unterseite des Strahlteilers, insbesondere teilweise, mit einer Beschichtung beschichtet ist/sind. Es könnten auch Ober- oder Unterseiten je oder gemeinsam vollständig mit demselben Material beschichtet sein. Eine Beschichtung, die günstig ist für eine Totalreflexion, welche mit einer bestimmten Phasenverschiebung zwischen senkrecht und parallel polarisiertem (s- und p-polarisiertem) Licht einhergeht, wird im folgenden Retarderschicht genannt. Eine Retarderschicht kann bevorzugt an einer Seitenfläche des Strahlteilers, bevorzugt and einer Ober- oder Unterseite des Strahlteilers angebracht werden. Die Retarderfunktion auf einem Interferometerarm wird nur dann erzielt, wenn die Beschichtungen sich unterscheiden in entweder Brechzahl oder Dicke. Durch gezielte Wahl von Brechzahl und Dicke der Beschichtung kann bei gegebenem Auftreffwinkel des Lichtstrahls der Laserlichtquelle eine gewünschte Phasenverschiebung zwischen s- und p-polarisiertem Licht erzielt werden.

Insbesondere ist es vorteilhaft, wenn die Brechzahl und die Dicke der Beschichtung derart gewählt sind, dass bei einem mittels totaler interner Reflexion reflektierten Lichtstrahl der Laserlichtquelle eine Phasenverschiebung um λ/4 erzielbar ist. Somit ist ein im Stand der Technik verwendetes λ/4-Plättchen nicht mehr notwendig. Der Strahlteiler ist mit einer einfachen Schicht geeigneter Brechzahl beschichtet, wodurch eine Grösse einer Phasenverschiebung kontrollierbar ist. Beispielsweise ist der Strahlteiler mit einer Hafniumdioxidschicht beschichtet, wobei die Hafniumdioxidschicht eine Brechzahl von etwa 1,82 aufweist. Eine Phasenverschiebung von λ/4 ist beispielsweise mit einer Schichtdicke von etwa 60 nm und/oder etwa 120 nm bei einer Laserwellenlänge von 638 nm erreichbar. Durch eine Anpassung der Schichtdicke und/oder eines Schichtmaterials kann nahezu jede erwünschte Phasenverschiebung für beliebige Substratmaterialien, Einfallswinkel und Laserwellenlänge erreicht werden, was zahlreiche Anwendungsmöglichkeiten eines erfindungsgemässen Referenzinterferometers eröffnet.

Weitere mögliche Beschichtungsmaterialien sind Indium-Zinn-Oxid, Titandioxid, Nb₂O₃, Ta₂O₃, ZrO₂, Sc₂O₃, Y₂O₃, sowie Mischoxide der genannten Oxide untereinander und/oder mit SiO₂.

Es ist vorteilhaft, wenn der Strahlteiler als Parallelepiped, insbesondere als gerades Vierecksprisma, vorzugsweise als Würfel oder Quader ausgebildet ist. Dadurch ist eine besonders einfache Realisierung des Referenzinterferometers gegeben bzw. möglich. Ein Strahlteilerquader kann beispielsweise 20 mm bis 30 mm mal 20 mm bis 30 mm mal 5 mm bis 10 mm, bevorzugt 22 mm bis 28 mm mal 22 mm bis 28 mm mal 6 mm bis 8 mm, insbesondere etwa 25 mm mal 25 mm mal 7 mm, gross sein.

Vorteilhaft ist es, wenn zumindest ein Detektor vorgesehen ist. Insbesondere kann es günstig sein, wenn eine Detektion des Lichtstrahles der Laserlichtquelle als Referenzstrahl mit einem Polarisationsstrahlteiler und zwei Detektoren erfolgt. Der zumindest eine Detektor kann insbesondere als Strahlungsdetektor, vorzugsweise als eine Fotozelle, Fotodiode oder ein Fotomultiplier, ausgebildet sein.

Die Laserlichtquelle kann ein Diodenlaser, insbesondere ein Distributed Feedback Laser (DFB-Laser), ein Distributed Bragg Reflector Laser (DBR-Laser) oder ein Vertical Cavity Surface-Emitting Laser (VCSEL) sein. Dabei handelt es sich um bevorzugte Laserlichtquellen, die sich gegenüber einem herkömmlichen Laser, bspw. einem HeNe-Laser, durch eine kompakte Bauweise, einen niedrigen Energieverbrauch und eine hohe Stabilität der Wellenlänge gegen Temperaturvariationen auszeichnen.

Unter einem Distributed Feedback Laser (DFB-Laser) wird im vorliegenden Zusammenhang eine Laserdiode verstanden, deren aktives Medium derart strukturiert ist, dass der Brechungsindex entlang der optischen Achse periodisch strukturiert ist.

Unter Distributed Bragg Reflector Lasern (DBR-Lasern) werden im vorliegenden Zusammenhang Laserdioden verstanden, deren aktives Medium an einem Ende durch einen Bragg-Spiegel (engl. *Distributed Bragg Reflector,* DBR) begrenzt ist und bei dem am anderen Ende ein herkömmlicher Auskoppelspiegel angebracht ist.

Unter Oberflächenemitter-Laserdioden (engl.: *vertical-cavity surface-emitting laser*; VCSEL) werden im vorliegenden Zusammenhang Laserdioden verstanden, bei denen das Licht senkrecht zur Ebene des Halbleiterchips abgestrahlt wird. Der Laserresonator wird dabei durch zwei parallel zur Ebene des Wafer angeordnete Bragg-Spiegel gebildet, zwischen denen das Lasermedium eingebettet ist.

Allerdings kann es sich bei der Laserlichtquelle auch um einen Diodenlaser anderer Bauart handeln. Je nach Art des Diodenlasers kann es vorteilhaft sein, wenn die Wellenlänge des von diesem bereitgestellten Lichtes durch ein bandenbegrenzendes Element, insbesondere durch ein Volumen-Bragg-Gitter (VBG) stabilisiert ist. Dies verleiht der Laserlichtquelle insbesondere eine höhere Stabilität der Laserwellenlänge gegen Temperaturvariationen.

Eine Verwendung eines erfindungsgemässen Referenzinterferometers erfolgt mit Vorteil zur Überprüfung einer optischen Weglängenänderung in Interferometerarmen.

Die vorliegende Erfindung betrifft darüber hinaus ein Interferometer mit einem oben beschriebenen Referenzinterferometer zur Überprüfung einer optischen Weglängenänderung in Interferometerarmen, insbesondere umfassend eine Lichtquelle für einen Nutzstrahl und mehrere optische Elemente. In einer bevorzugten Ausführungsform sind der Nutzstrahl und der Lichtstrahl der Laserlichtquelle durch denselben Strahlteiler führbar, wobei der Lichtstrahl der Laserlichtquelle einen Referenzstrahl darstellt. Ein damit erzielter Vorteil ist insbesondere darin zu sehen, dass eine Quadraturdetektion im Interferometer besonders einfach möglich ist, wenn der Nutzstrahl und der Referenzlichtstrahl durch denselben Strahlteiler geführt werden. Der Referenzstrahl ist über interne Totalreflexion an einer Oberseite und Unterseite des Strahlteilers geführt. Diese Geometrie erlaubt eine besonders einfache und kompakte Bauweise des Interferometers. Das erfindungsgemässe Interferometer ist dadurch gekennzeichnet, dass die Lichtquellen so positioniert sind, dass der Nutzstrahl und der Referenzstrahl im Wesentlichen parallel zueinander auf das Interferometer zulaufen und/oder ein im Strahlengang nachgelagertes Prisma so positioniert ist, dass der Nutzstrahl und der Referenzstrahl im Wesentlichen parallel zueinander vom Interferometer weglaufen. Der Strahlengang des Nutzstrahls bzw. des ersten und zweiten Teils des Nutzstrahls verläuft dabei bevorzugt auf der zentralen x-Achse und der zentralen z-Achse.

In einer bevorzugten Ausführungsform wird der Referenzstrahl oberhalb oder unterhalb des Nutzstrahls auf das Prisma, auf den Strahlteiler und von da aus auf die Ober - respektive Unterseite des Strahlteilers gelenkt, sodass die Strahlen auf den im Wesentlichen gleichen Bereich wie der Nutzstrahl auf das Spiegelelement auftreffen. Dies hat den Vorteil, dass die Strahlen auf den Spiegeln des Interferometers auf überlappende Flächen fallen. Bevorzugt befindet sich der überlappende Bereich der Einfallsflächen der beiden Strahlen im Zentrum der Spiegelfläche des Spiegelelements.

Dadurch ergibt sich eine optimale Genauigkeit des Aufbaus. Denn durch die (praktisch kaum vollständig vermeidbare) dynamische Spiegeldeformation beim Interferometerbetrieb ergeben sich Änderungen auf die Strahlenführung, welche sich aber in der bevorzugten Ausführungsform gleichermassen auf den Nutz- und den Referenzstrahl auswirken. Dadurch wird eine optimale Referenzierung der optischen Weglängenunterschiede ermöglicht.

Das erfindungsgemässe Interferometer ermöglicht also eine getrennte Führung von Nutz- und Referenzstrahl beim Eintritt in und beim Austritt aus dem Strahlteiler und gleichzeitig ein Zusammenführen der Strahlen auf den überlappenden Flächen der jeweiligen Spiegelelemente. Damit wird den Anliegen der Kompaktheit, Präzision und Kosteneffizienz Rechnung getragen.

Bevorzugt ist der Eintrittsort des Referenzstrahls in den Strahlteiler resp. das vorgelagerte Prisma und/oder der Eintrittsort des Nutzstrahls in den Strahlteiler mit einer Antireflexbeschichtung versehen, welche an die Wellenlänge des jeweiligen Strahls angepasst ist. Eine teure Antireflexbeschichtung, welche sowohl das Spektrum des Nutz- als auch dasjenige des Referenzstrahls abdeckt, ist nicht notwendig.

Es ist ein Vorteil eines in das Nutzinterferometer integrierten und erfindungsgemässen Referenzinterferometers, dass der Nutzstrahl und der Referenzstrahl parallel aber räumlich versetzt auf den Strahlteiler einfallen können. Die Parallelität erlaubt besonders optimale Vergleichbarkeit der Eigenschaften der beiden Strahlen, welche gleichzeitig über überlappende Flächen der gleichen Spiegelelemente geführt werden. Die räumliche Versetzung beim Eintritt in den Strahlteiler kann aber dank dem erfindungsgemässen Aufbau dennoch so gross gewählt werden kann, dass kostengünstigere Antireflexbeschichtungen, je angepasst an die Wellenlängen des Referenz- bzw. Nutzstrahls, verwendet werden können.

Bei einem kombinierten Nutzinterferomenter und Referenzinterferometer ist es bevorzugt, wenn das im Strahlengang des Referenzstrahls befindliche Prisma oder die im Strahlengang des Referenzstrahls befindlichen Prismen aus einem Material gefertigt sind, welche für die Wellenlänge des Referenzstrahls besonders gut durchlässige, für die Wellenlängen des Nutzstrahls aber undurchlässig sind. Dadurch kann eine unerwünschte Überlagerung des Referenzlichtstrahls mit Streulicht des Nutzstrahls vermieden werden.

Günstig ist es, wenn das Interferometer als Zweistrahlinterferometer ausgebildet ist. Besonders bevorzugt ist dieses als Fourier-Transformationsspektrometer oder als monolithisches Michelson-Interferometer ausgebildet.

Zweckmässig ist es, wenn das Referenzinterferometer zur Quadraturdetektion ausgebildet ist, um eine relative optische Weglängenänderung in den Interferometerarmen des Interferometers zu messen.

Die vorliegende Erfindung betrifft darüber hinaus ein Spektrometer, insbesondere Nah-Infrarot-Spektrometer, mit einem Interferometer wie oben beschrieben.

Ein weiteres Ziel wird erreicht, wenn bei einem Verfahren der eingangs genannten Art der Lichtstrahl der Laserlichtquelle als Referenzstrahl mittels totaler interner Reflexion über eine erste Seitenfläche, insbesondere eine Oberseite, und eine zweite Seitenfläche, insbesondere eine Unterseite, des Strahlteilers geführt wird.

Ein damit erzielter Vorteil ist insbesondere darin zu sehen, dass über die totale interne Reflexion bzw. interne Totalreflexion an der ersten Seitenfläche und der zweiten Seitenfläche, insbesondere einer Oberseite und Unterseite, des Strahlteilers eine optische Weglängenänderung des Nutzstrahles besonders einfach und effizient gemessen werden kann. Ferner kann das Interferometer sehr kompakt (auch monolithisch) gebaut werden, was Vorteile bringt hinsichtlich der mechanischen Robustheit.

Günstig ist es, wenn eine Polarisation des Referenzstrahles verändert wird. Hierfür wird der Strahlteiler zumindest teilweise beschichtet, wobei mithilfe einer einfachen Schicht geeigneter Brechzahl eine Grösse einer Phasenverschiebung kontrolliert wird.

Insbesondere bei einem als Quader oder Würfel ausgebildeten Strahlteiler ist es vorteilhaft, wenn der Referenzstrahl und der Nutzstrahl aus voneinander unterschiedlichen Winkeln auf die Strahlteilerseitenfläche geführt werden. Insbesondere wird der Nutzstrahl mit einem Einfallswinkel von weniger als 7°, vorzugsweise weniger als 3°, bevorzugterweise weniger als 1°, zur Flächennormale der Strahlteilerseitenfläche geführt. In einer bevorzugten Ausführungsform wird der Nutzstrahl mit einem Einfallswinkel von 0° zur Flächennormale der Strahlteilerseitenfläche geführt. Im Unterschied dazu wird die optische Achse des Referenzstrahls nach Durchlaufen des Prismas in einem schrägen Einfallswinkel auf die Strahlteilerseitenfläche geführt, beispielsweise mit einem Winkel von 30° bis 89°, vorzugsweise 50° bis 85°, bevorzugterweise 65° bis 80°, zur y-Achse. Je nach Ausführung ist allerdings auch ein Einfallswinkel von 65° bis 88°, vorzugsweise von 70° bis 83°, bevorzugterweise von 75° bis 78° zur y-Achse vorteilhaft. In einer besonders bevorzugten Ausführungsform wird der Referenzstrahl mit einem Einfallswinkel von 76,5° zur y-Achse geführt.

Vorteilhaft ist es weiter, wenn der Referenzstrahl und der Nutzstrahl von zumindest einem Detektor erfasst werden. Insbesondere sind zwei Detektoren vorgesehen, wobei der Referenzstrahl und der Nutzstrahl erfasst werden. Zudem kann es günstig sein, wenn für den als Referenzstrahl ausgebildeten Lichtstrahl ein Polarisationsstrahlteiler vor dem Detektor angeordnet ist. In diesem Fall sind insgesamt zumindest drei Detektoren erforderlich.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
- Fig. 1a: eine aus dem Stand der Technik bekannte Vorrichtung zur Quadraturdetektion;
- Fig. 1b: Interferometer gemäss EP17205704.4;
- Fig. 2: Schematische Darstellung eines erfindungsgemässen Referenzinterferometers;
- Fig. 3: Bevorzugte Ausführungsform eines erfindungsgemässen Referenzinterferometers im Grundriss;
- Fig. 4: Alternative Ausführungsform eines erfindungsgemässen Referenzinterferometer im Grundriss;
- Fig. 5: Ansicht eines Strahlengangs in einem Interferometerarm im AA-Schnitt gem. Fig. 4, inkl. Nutzstrahl;
- Fig. 6: Ansicht eines Strahlengangs in einem Referenzinterferometerarm im BB-Schnitt gem. Fig. 4 ohne Nutzstrahl;
- Fig. 7: Schematische Darstellung eines Strahlengangs im erfindungsgemässen Interferometer im BB-Schnitt mit Details zur Phasenverschiebung;
- Fig. 8: Beispielhafte Darstellung der Phasen von s- und p-polarisiertem Licht eines Referenzstrahls in Abhängigkeit der Schichtdicke der Retarderschicht;
- Fig. 9: Darstellung einer Differenz zwischen einer Phasenverschiebung für unterschiedlich polarisiertes Licht, simulierte Werte;
- Fig. 10: Darstellung einer Differenz zwischen einer Phasenverschiebung für unterschiedlich polarisiertes Licht, simulierte Werte und Daten aus der experimentellen Verifikation.

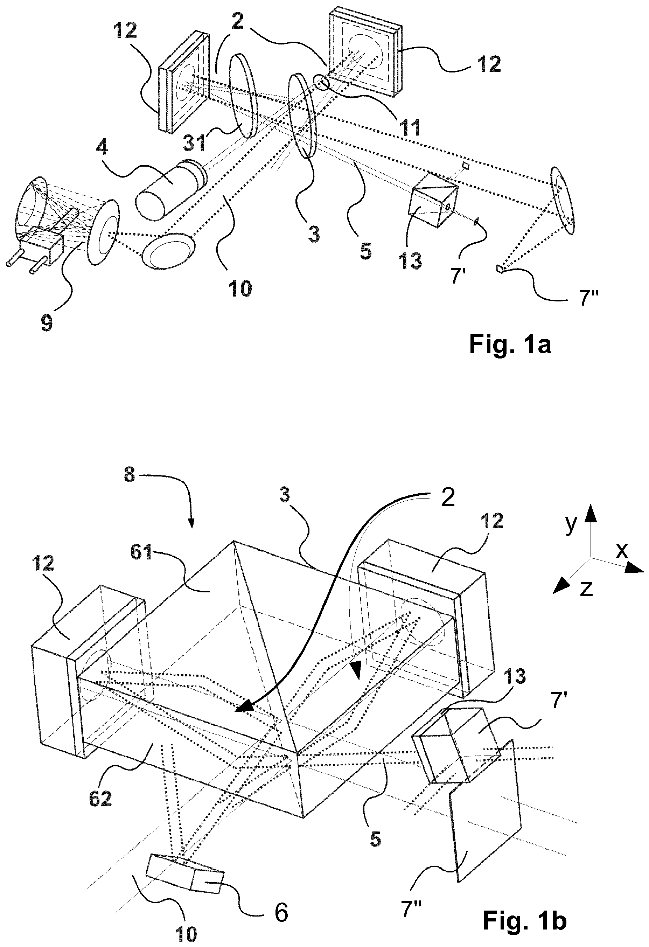

Fig. 1a zeigt eine aus dem Stand der Technik bekannte Vorrichtung zur Quadraturdetektion. Diese Vorrichtung umfasst ein Michelson-Interferometer mit einem Referenzinterferometer für eine konventionelle Quadraturdetektion. Weiter umfasst die Vorrichtung eine Laserlichtquelle 4 sowie eine weitere Lichtquelle 9. Ein als Referenzstrahl ausgebildeter Lichtstrahl 5 und ein Nutzstrahl 10 sind an der Position eines λ/4-Plättchens 11 räumlich voneinander getrennt, wofür der Referenzstrahl verkippt ist. Die Vorrichtung umfasst weitere optische Elemente wie einen Strahlteiler 3, Spiegel 12, Detektoren 7', 7", ein Kompensatorelement 31 und einen Polarisationsstrahlteiler 13. Um einen Wegunterschied daraus resultierend, dass der am Strahlteiler 3 reflektierte Strahl den Strahlteiler 3 nicht durchquert, zu kompensieren, weist die Vorrichtung ein Plättchen 31 auf, welches aus demselben Material und in derselben Dicke wie der Strahlteiler 3 ausgebildet ist. Das Retarderplättchen 11 ist so ausgerichtet, dass es aus dem einfallenden Referenzstrahl zwei orthogonale Polarisationen (s- und p-Polarisationen) erzeugt, die eine Phasendifferenz zueinander haben. Vorzugsweise wird ein Retarder 11 so gewählt, dass eine Phasendifferenz von 90° (oder n/2) resultiert.

In Fig. 1b ist ein Interferometer 8 gemäss der in EP17205704.4 offenbarten Lehre gezeigt. Das Interferometer 8 ist als Michelson-Interferometer in monolithischer Bauweise ausgebildet. Das Referenzinterferometer 1 umfasst eine in Fig. 1b nicht dargestellte Laserlichtquelle, welche einen Lichtstrahl 5 emittiert. Darüber hinaus ist ein als Strahlteilerquader ausgebildeter Strahlteiler 3 vorgesehen. Das Interferometer 8 umfasst weiter eine in Fig. 1b nicht dargestellte Lichtquelle, welche einen Nutzstrahl 10 emittiert. Sowohl der Nutzstrahl 10 als auch der als Referenzstrahl ausgebildete Lichtstrahl 5 werden durch den Strahlteiler 3 geführt. Der Referenzstrahl kann mittels Spiegel 6 auf den Strahlteiler gelenkt sein. Wie beschrieben kann alternativ vorgesehen sein, dass die Laserlichtquelle an der Stelle des Spiegels 6 positioniert und gegenüber dem Nutzstrahl 10 verkippt ist. Weiter ist der Referenzstrahl mittels interner Totalreflexion über eine Oberseite 61 und Unterseite 62 des Strahlteilers 3 geführt. Die Oberseite 61 und/oder Unterseite 62 des Strahlteilers 3 ist beispielsweise mit Hafniumdioxid beschichtet. Die Beschichtung des Strahlteilers ersetzt das λ/4-Plättchen 11 einer bekannten Vorrichtung gemäss Fig. 1a. Ferner umfasst das Interferometer 8 einen ersten Detektor 7' sowie einen zweiten Detektor 7" und einen Polarisationsstrahlteiler 13 zur Detektion des als Referenzstrahl ausgebildeten Lichtstrahles 5 und des Nutzstrahles 10. Dabei ist der Polarisationsstrahlteiler 13 vor dem ersten Detektor 7' angeordnet ist, welcher zur Detektion des Referenzstrahles vorgesehen ist. Weiter kann es vorgesehen sein, dass Spiegel 12, insbesondere bewegbare Spiegel 12, am Strahlteiler 3, insbesondere mittels direkt am Strahlteiler 3 aufgeklebten Spiegelgehäusen, montiert sind. Die Spiegel 12 sind als Mikrosystemtechnikkomponenten (MEMS-Komponenten) ausgebildet.

Der Phasenunterschied zwischen s- und p-polarisierten Referenzstrahlen im gezeigten Interferometer wird durch die Totalreflexion eines Teilstrahls an der Oberseite 61 und/oder an der Unterseite 62 des Strahlteilerkörpers erzeugt. Durch die Beschichtung der Ober- oder der Unterseite in einem Interferometerarm kann die Phasendifferenz eingestellt werden. Die Phasendifferenz ist abhängig von Brechungsindex und Dicke der Retarderschicht, vom Brechungsindex des Strahlteilerkörpermaterials, vom Einfallswinkel auf die Retarderschicht sowie von der Wellenlänge der Referenzlichtquelle.

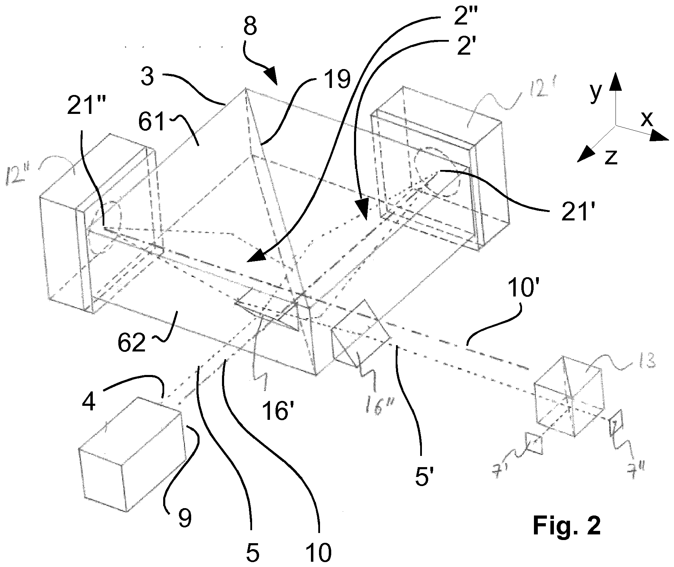

In Fig. 2 ist eine schematische Darstellung eines Interferometers mit erfindungsgemässer Strahlenführung gezeigt. Der Strahlteiler 3 ist als Prisma realisiert. Es sind aber auch andere Geometrien realisierbar. Der Referenzstrahl 5, 5' ist durch gepunktete Linien dargestellt. Der Nutzstrahl 10, 10' ist durch eine strichpunktierte Linie dargestellt.

Die optische Achse des Nutzstrahls 10 verläuft zunächst auf der zentralen z-Achse. Nach dem Teilen des Strahls 10 an der Strahlteilerschicht 19 verläuft die optische Achse eines ersten Teils des Nutzstrahls 10 in einem ersten Interferometerarm 2' des Interferometers weiter auf der zentralen z-Achse, d.h. auf der Flächennormalen zur Spiegelfläche eines ersten Spiegelelements 12' durch dessen Mitte 21'. Die optische Achse des zweiten Teils des Nutzstrahls 10 verläuft im zweiten Interferometerarm 2" auf der zentralen x-Achse, d.h. auf der Flächennormalen zur Spiegelfläche eines zweiten Spiegelelements 12" durch dessen Mitte 21".

Die optischen Achsen von Nutzstrahl 10 und Referenzstrahl 5 vor dem Einfall in das vorgelagerte Prisma 16' sind parallel. Durch die Lichtbrechung an der schrägen Eintrittsfläche respektive am vorgelagerten Prisma 16' wird der Referenzstrahl 5 gegen die Oberseite 61 des Strahlteilerkörpers hin gebrochen. Der Referenzstrahl verläuft also im Strahlteiler 3 nicht mehr parallel zur x- oder zur z-Achse. Die Fläche 16' kann mit einer Antireflexbeschichtung für die Laserwellenlänge des Referenzstrahls versehen sein. Die darunterliegende Fläche, durch welche der Nutzstrahl in den Strahlteilkörper eintritt, kann mit einer Antireflexbeschichtung für den Wellenlängenbereich des Nutzstrahls versehen sein. Die an der Strahlteilerschicht gebildeten Teilstrahlen des Referenzstrahls werden an der Oberseite 61 totalreflektiert und fallen sodann auf die Mitte 21' des Spiegels 12' im ersten Interferometerarm 2' respektive auf die Mitte 21" des Spiegels 12" im zweiten Interferometerarm 2".

Die Einfallsstellen von Nutz- und Referenzstrahlen überlappen räumlich auf dem jeweiligen Mittelpunkt der Spiegel 12' und 12", wodurch die optimale Referenzierung des Interferogramms sichergestellt wird.

Der Nutzstrahl 10' tritt nach dem zweiten Passieren der Strahlteilerschicht 19 auf der zentralen x-Achse aus dem Strahlteilerkörper 3 wieder aus.

Nach Totalreflexion an der Unterseite 62 des Strahlteilerkörpers 3 und nach Reflexion bzw. Transmission an der Strahlteilerfläche 19 verlassen die Referenzstrahlen den Strahlteilerkörper 3. Beim Austritt aus dem Strahlteilerkörper sind die optischen Achsen von Referenz- und Nutzstrahl noch nicht parallel. Der Referenzstrahl 5' wird daher durch das im Strahlengang nachgelagerte Prisma 16" so gebrochen, dass er zum Nutzstrahl 10' und damit zur x-Achse parallel ausgerichtet wird.

Der Referenzstrahl 5' wird nach dem Austritt aus dem Strahlteilerkörper und Brechung an der Prismafläche 16" durch einen polarisierenden Strahlteiler 13 in s- und p-polarisierte Teilstrahlen aufgeteilt, welche je auf den Detektoren 7' bzw. 7" detektiert werden.

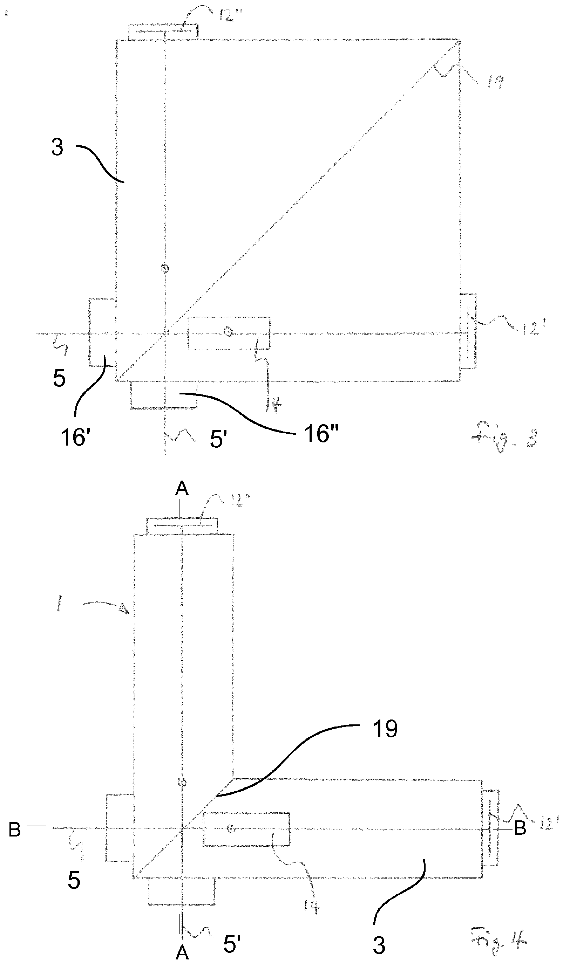

In Fig. 3 ist ein Grundriss eines erfindungsgemässen Referenzinterferometers 1 gezeigt. Genauer zeigt Fig. 3 den Strahlengang eines Referenzstrahls 5, 5' durch einen Strahlteiler 3, an welchem zwei bewegliche Spiegel 12', 12" angeordnet sind. Der Strahlteiler 3 ist teilweise mit einer Hafniumdioxid-Schicht 14 beschichtet, welche eine Brechzahl von 1,82 bei der Laserwellenlänge von 638 nm aufweist. Der Strahlteiler 3 selbst ist aus Quarzglas mit einer Brechzahl von 1,46 ausgebildet. Der Referenzstrahl 5 tritt von links in den Strahlteilerkörper ein, wird durch Prisma 16' gebrochen und wird an der Strahlteilerschicht in zwei Teilstrahlen aufgeteilt. Der transmittierte Teil trifft sodann auf die Retarder-Beschichtung 14, welche hier auf der Oberseite des Strahlteilerkörpers ausgebildet ist. Nach totaler interner Reflexion an Fläche 14 trifft der Referenzstrahl auf den Spiegel 12' und hernach auf die Unterseite des Strahlteilerkörpers, wo er erneut totalreflektiert wird. Dasselbe gilt sinngemäss für den Teilstrahl, der an der Strahlteilerschicht reflektiert wird und via die Oberseite des Strahlteilerkörpers auf Spiegel 12" gelenkt wird. Die Strahlen werden an der Strahlteilerschicht 19 wieder vereinigt und verlassen das Interferometer, um in Prisma 16" nochmals gebrochen zu werden. Die offenen Kreise bezeichnen die Auftrittsbereiche des Referenzstrahls auf die Oberseite des Strahlteilerkörpers.

Fig. 4 zeigt ein alternatives Ausführungsbeispiel des erfindungsgemässen Referenzinterferometers 1 im Grundriss. Sie unterscheidet sich vom Ausführungsbeispiel nach Fig. 3 dadurch, dass der Strahlteilerkörper nicht als Quader, sondern als L-förmige Struktur mit zwei individuell ausgebildeten Interferometerarmen bereitgestellt wird.

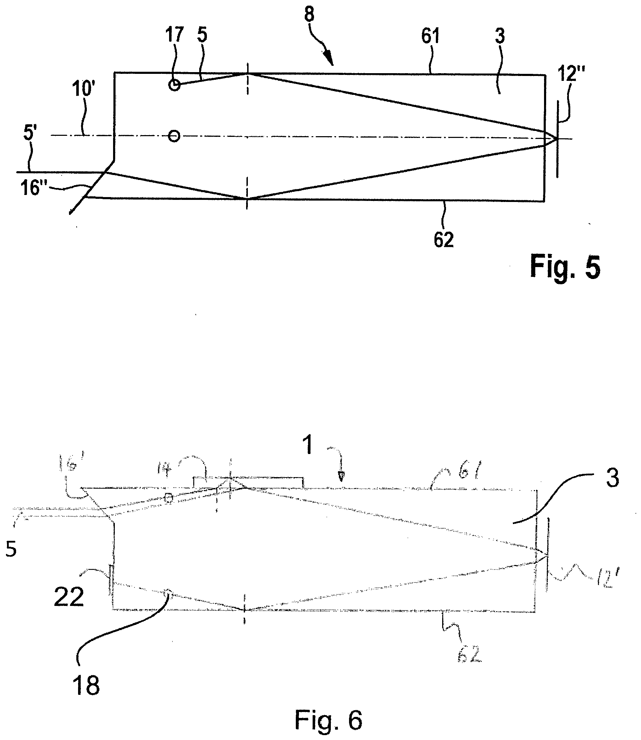

Die Figuren 5 und 6 zeigen jeweils einen Schnitt durch das erfindungsgemässe Interferometer 8, wobei der Schnitt in Fig. 5 entlang dem Interferometerarm ohne Retarderschicht erfolgt ist (senkrechter Arm in Fig. 4, AA-Schnitt). Fig. 6 dagegen zeigt einen Schnitt durch den Interferometerarm, welcher die Retarder-beschichtung 14 aufweist (horizontaler Arm in Fig. 4, BB-Schnitt).

Der obere offene Kreis 17 in Fig. 5 markiert die Stelle, wo der Referenzstrahl in die Strahlteilerschicht 19 eintritt, um seinen Weg über zwei Seitenflächen des Interferometerarms und ein Spiegelelement (12") zu absolvieren. Die optische Achse des Referenzstrahls ist durch die ausgezogene Linie, diejenige des Nutzstrahls durch die strichpunktierte Linie dargestellt. Der Referenzstrahl 5 tritt über die geneigte Eintrittsfläche des Prismas 16' (nicht gezeigt) in den Strahlteilerkörper ein. Nach Reflexion an der Strahlteilerschicht 19 (nicht gezeigt), Totalreflexion an der Oberseite 61, Reflexion am Spiegel 12", Totalreflexion an der Unterseite 62 des Strahlteilerkörpers und Transmission durch die Strahlteilerschicht 19 (nicht gezeigt) verlässt der Strahl das Interferometer durch die Prismafläche 16" wieder. Nach dem Verlassen des Interferometers verläuft der Referenzstrahl 5' parallel zum reflektierten Nutzstrahl 10'.

Fig. 6 zeigt den Strahlengang des Teils des Referenzstrahls, welcher durch die Strahlteilerschicht 19 (nicht gezeigt) transmittiert wird. Der Referenzstrahl 5 tritt von links über die geneigte Fläche 16' in den Strahlteilerkörper ein, um seinen Weg über zwei Seitenflächen 61, 62 des Interferometerarms 2' und das Spiegelelement 12' zu absolvieren. Die optische Achse des Referenzstrahls ist durch die ausgezogene Linie dargestellt. Nicht gezeigt ist in dieser Darstellung der Nutzstrahl. Nach Totalreflexion an der Retarderschicht 14, Reflexion am Spiegel 12' und Totalreflexion an der Unterseite 62 verlässt der Strahl den Strahlkörper via Strahlteilerschicht 19 (nicht gezeigt) wieder. Der untere offene Kreis 18 in Fig. 6 markiert die Stelle, wo der Referenzstrahl von der Strahlteilerschicht weg und aus dem Strahlteiler hinaus gelenkt wird. Nach der Brechung durch das Prisma 16" (nicht gezeigt) verläuft der Referenzstrahl 5' parallel zum reflektierten Nutzstrahl (nicht gezeigt). Ein geringer Teil des vom Spiegel 12' reflektierten Referenzstrahls wird durch die Strahlteilerschicht 19 transmittiert. Dieser transmittierte Anteil verlässt entweder das Interferometer in Richtung Referenzlichtquelle oder wird, wie gezeigt, durch eine opake Beschichtung 22 absorbiert.

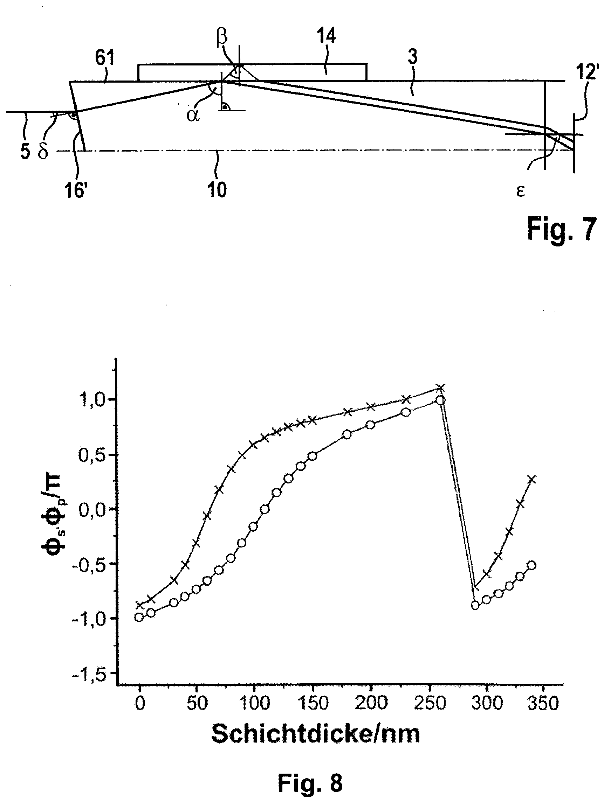

Fig. 7 zeigt ein Beispiel einer Phasenverschiebung von senkrecht und parallel (s- und p-) polarisiertem Licht eines Referenzstrahls resultierend aus totaler interner Reflexion an einer Retarderschicht 14. Im gezeigten Beispiel trifft ein Laserstrahl 5 mit einer Wellenlänge λ=638nm auf eine Eintrittsfläche des Prismas 16', wobei die Normale der Eintrittsfläche für den Referenzstrahl 5 gegenüber der optischen Achse des Referenzstrahls 5 um den Winkel δ geneigt ist. Der Strahl tritt unter dem Einfallswinkel α von etwa 76,5° zur Normalen auf die Grenzfläche zwischen dem Quarzglas des Strahlteilers 3 und der Hafniumdioxid-Schicht 14. Mit einer einfachen Schicht eines Materials von geeigneter Brechzahl ist die Grösse der Phasenverschiebung kontrollierbar. Die Phasenverschiebung resultiert, wenn der Laserstrahl an der Grenzschicht zwischen dem Quarzglas des Strahlteilers 3 mit einer Brechzahl von beispielsweise n₁=1,46 und der Hafniumdioxid-Schicht 14 mit einer Brechzahl von beispielsweise n₂=1,82 totale interne Reflexion erfährt. Ein Winkel β zur Flächennormalen der Hafniumdioxid-Schicht 14 beträgt etwa 49,7°. Wie aus der Figur ersichtlich ist, übernimmt die Hafniumdioxid-Schicht 14 die Funktion eines λ/4-Plättchens 11 gemäss einem herkömmlichen Referenzinterferometer wie in Fig. 1 gezeigt. Zur Phasenverschiebung tragen mehrere Effekte bei. Der Strahl 5 interferiert mit an der Grenzfläche zwischen dem Strahlteiler 3 und der Hafniumdioxid-Schicht 14 reflektierten Anteilen und mit Anteilen, die mehrfach in der Hafniumdioxid-Schicht 14 reflektiert werden, und somit eine grössere Phasenverschiebung akkumulieren. In der Summe führt dies zu einer mit einer Dicke der Hafniumdioxid-Schicht 14 periodischen Modulation. Der totalreflektierte Referenzstrahl tritt unter dem Winkel ε aus dem Strahlteilerkörper aus und schneidet die optische Achse des Nutzstrahls auf der Spiegelfläche (12').

Fig. 8 zeigt eine schematische Darstellung der Phasenverschiebung von senkrecht und parallel (s- und p-) polarisierten Referenzstrahlen als Resultat von totaler interner Reflexion in Abhängigkeit von der Schichtdicke der Retarderschicht 14.

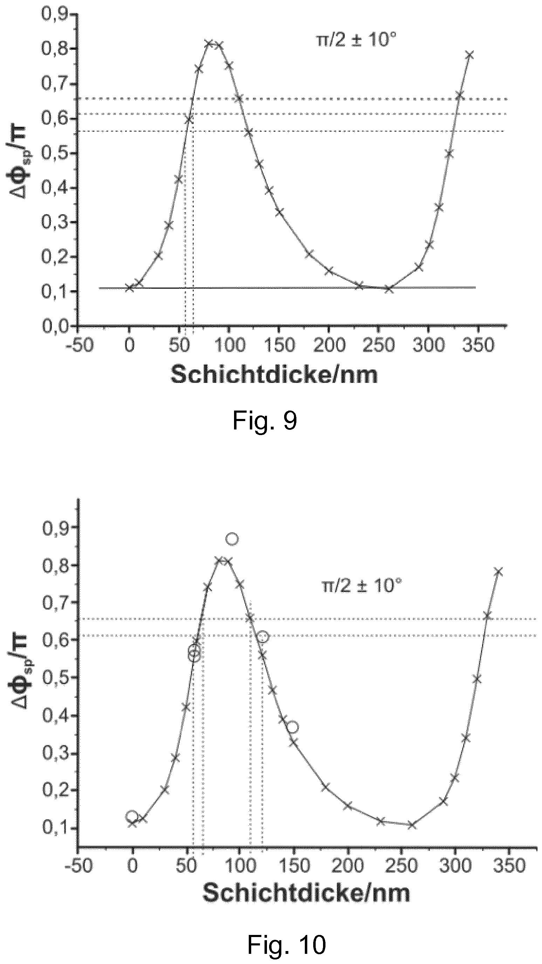

Fig. 9 zeigt die Differenz der Phasen vom jeweils s- und p-polarisiertem Licht des Referenzstrahls als Funktion der Dicke der Retarderschicht 14 bei interner Totalreflexion an einer Grenzfläche wie in Figur 7 gezeigt. Es ist ersichtlich, dass mit einer Dicke der Hafniumdioxid-Schicht von 60 nm oder 120 nm eine Phasenverschiebung von π/2 (entsprechend λ/4) erreicht wird. Durch eine Anpassung der Schichtdicke und/oder eines Schichtmaterials ist nahezu jede erwünschte Phasenverschiebung für beliebige Substratmaterialien und Einfallswinkel erreichbar.

Bei den in Fig. 10 dargestellten Daten handelt es sich um simulierte Daten, welche halbanalytisch manuell verifiziert wurden. Die Dicke der für die Messung verwendeten Hafniumdioxid-Schichten betrug etwa 58 nm, etwa 93 nm, etwa 121 nm und etwa 149 nm. Eine Phasenverschiebung zwischen s- und p-polarisiertem Licht wurde mit einem Testinterferometer vermessen. Fig. 10 zeigt einen Vergleich der theoretischen Werte gemäss Fig. 9 mit experimentellen Werten. Es ist ersichtlich, dass die experimentellen und theoretischen Werte gut übereinstimmen.

Grundsätzlich hängen genaue Werte einer Phasenverschiebung empfindlich von einer Dicke einer Beschichtung und einem Einfallswinkel des Lichtes ab. Bei einer Anwendung des Referenzinterferometers 1 zur Quadraturdetektion ist eine exakte Phasenverschiebung von λ/4 nicht essenziell, eine Abweichung von ± λ/20 ist durchaus zulässig, sodass auch produktionstechnische Toleranzen keine Schwierigkeiten darstellen.

## Patentansprüche

1. Referenzinterferometer (1) zur Bestimmung einer optischen Weglängenänderung, insbesondere einer relativen optischen Weglängenänderung in Interferometerarmen (2), umfassend einen Strahlteiler (3) und eine Laserlichtquelle (4), wobei der Strahlteiler (3) derart ausgebildet ist, dass ein Lichtstrahl (5) der Laserlichtquelle (4) mittels totaler interner Reflexion über eine erste Seitenfläche, insbesondere eine Oberseite (61), und eine zweite Seite, insbesondere eine Unterseite (62), des Strahlteilers (3) führbar ist, **dadurch gekennzeichnet, dass** dem Strahlteiler (3) im Strahlengang wenigstens ein Prisma (16') vorgelagert ist, mit welchem der in den Strahlteiler (1) eintretende Lichtstrahl (5) umgelenkt werden kann, und/oder **dadurch gekennzeichnet, dass** dem Strahlteiler (3) im Strahlengang wenigstens ein Prisma (16") nachgelagert ist, mit welchem der aus dem Strahlteiler (3) austretende Lichtstrahl (5') umgelenkt werden kann.

2. Referenzinterferometer (1) nach Anspruch 1, wobei das wenigstens eine Prisma (16') so ausgebildet ist, dass ein im Wesentlichen auf der zentralen z-Achse oder parallel zur zentralen z-Achse auf den Strahlteiler zulaufender Lichtstrahl (5) gebrochen und schräg auf eine erste Seitenfläche geführt werden kann; besonders bevorzugt ist ein gerades dreiseitiges Prisma, welches den Lichtstrahl auf eine Oberseite (61) des Strahlteilers (3) lenken kann.

3. Referenzinterferometer (1) nach Anspruch 1, wobei das wenigstens eine Prisma (16") so ausgebildet ist, dass ein schräg zur zentralen x-Achse vom Strahlteiler weglaufender Lichtstrahl (5') gebrochen und im Wesentlichen auf einen Verlauf auf der zentralen x-Achse oder parallel zur zentralen x-Achse geführt werden kann; besonders bevorzugt ist ein gerades dreiseitiges Prisma, welches den von einer Unterseite (62) her eintretenden Lichtstrahl bricht.

4. Referenzinterferometer (1) nach einem der Ansprüche 1 bis 3, **dadurch gekennzeichnet, dass** zumindest die Oberseite (61) und/oder die Unterseite (62) des Strahlteilers (3), insbesondere teilweise, mit einer Beschichtung versehen ist/sind.

5. Referenzinterferometer (1) nach einem der Ansprüche 1 bis 4, **dadurch gekennzeichnet, dass** die Brechzahl und die Dicke der Beschichtung derart gewählt sind, dass bei einem mittels totaler interner Reflexion reflektierten Lichtstrahl (5) der Laserlichtquelle (4) eine Phasenverschiebung um n/2 ± n/10, vorzugsweise um n/2 ± n/20 zwischen s- und p-polarisierten totalreflektierten Strahlen erzielbar ist.

6. Referenzinterferometer (1) nach einem der Ansprüche 1 bis 5, **dadurch gekennzeichnet, dass** der Strahlteiler (3) als Parallelepiped, insbesondere als gerades Vierecksprisma, vorzugsweise als Quader, ausgebildet ist.

7. Referenzinterferometer (1) nach einem der Ansprüche 1 bis 6, **dadurch gekennzeichnet, dass** zumindest ein Detektor (7) vorgesehen ist, bevorzugt sind zwei photoelektrische Detektoren (7', 7") zur Detektion von zwei durch einen Polarisationsstrahlteiler (13) geteilte Teilstrahlen vorgesehen.

8. Referenzinterferometer (1) nach einem der Ansprüche 1 bis 7, **dadurch gekennzeichnet, dass** die Laserlichtquelle (4) ein Diodenlaser, insbesondere ein Distributed Feedback Laser, ein Distributed Bragg Reflector Laser oder ein Vertical Cavity Surface-Emitting Laser ist.

9. Verwendung eines Referenzinterferometers (1) nach einem der Ansprüche 1 bis 8 zur Überprüfung einer optischen Weglängenänderung in Interferometerarmen (2).

10. Interferometer (8) mit einem Referenzinterferometer (1) nach einem der Ansprüche 1 bis 8 zur Überprüfung einer optischen Weglängenänderung in Interferometerarmen (2), insbesondere umfassend eine zweite Lichtquelle (9) für einen Nutzstrahl (10) und mehrere optische Elemente, wobei der Nutzstrahl (10) der Lichtquelle (9) und der Lichtstrahl (5) der Laserlichtquelle (4) durch denselben Strahlteiler (3) führbar sind, und wobei der Lichtstrahl (5) der Laserlichtquelle (4) einen Referenzstrahl darstellt, **dadurch gekennzeichnet, dass** dem Strahlteiler (3) im Strahlengang wenigstens ein Prisma (16') vorgelagert ist, mit welchem der im Wesentlichen parallel zum Nutzstrahl (10) auf den Strahlteiler (3) zulaufende Referenzstrahl (5) umgelenkt werden kann, und/oder dem Strahlteiler (3) im Strahlengang wenigstens ein Prisma (16") nachgelagert ist, mit welchem der Referenzstrahl (5') gebrochen werden kann, sodass der Nutzstrahl (10') und der Referenzstrahl (5') im Wesentlichen parallel zueinander vom Interferometer weglaufen.

11. Interferometer nach Anspruch 10, **dadurch gekennzeichnet, dass** das Interferometer (8) als Zweistrahlinterferometer ausgebildet ist.

12. Interferometer nach einem der Ansprüche 10 bis 11, **dadurch gekennzeichnet, dass** das Referenzinterferometer (1) zur Quadraturdetektion ausgebildet ist.

13. Interferometer nach einem der Ansprüche 10 bis 12, **dadurch gekennzeichnet, dass** der Eintrittsort des Referenzstrahls in das dem Strahlteiler vorgelagerte Prisma und/oder der Eintrittsort des Nutzstrahls in den Strahlteiler mit Antireflexbeschichtungen versehen sind; bevorzugt ist die Antireflexbeschichtungen am Eintrittsort des Referenzstrahls in das dem Strahlteiler vorgelagerte Prisma an die Wellenlänge des Referenzstrahls angepasst und es ist die Antireflexbeschichtung am Eintrittsort des Nutzstrahls in den Strahlteiler an den Wellenlängenbereich des Nutzstrahls angepasst.

14. Spektrometer, insbesondere Nah-Infrarot-Spektrometer, mit einem Interferometer (8) nach einem der Ansprüche 9 bis 13.

15. Verfahren zur Bestimmung einer optischen Weglängenänderung, insbesondere einer relativen optischen Weglängenänderung in Interferometerarmen (2), wobei von einer Laserlichtquelle (4) ein Lichtstrahl (5) als Referenzstrahl auf einen Strahlteiler (3) gestrahlt wird, und mittels totaler interner Reflexion über eine erste Seitenfläche, insbesondere eine Oberseite (61), und eine zweite Seitenfläche, insbesondere eine Unterseite (62), des Strahlteilers (3) geführt wird, **dadurch gekennzeichnet, dass** der Lichtstrahl in einem ersten Abschnitt des Strahlengangs auf der zentralen z-Achse oder parallel zur zentralen z-Achse verläuft, vor dem Eintritt in den Strahlteiler über wenigstens ein erstes Prisma (16') in einem mittleren Abschnitt des Strahlengangs schräg zur zentralen z-Achse geführt wird, und/oder nach dem Austritt aus dem Strahlteiler durch wenigstens ein zweites Prisma (16") wieder in einen Strahlengang auf der zentralen x-Achse oder parallel zur zentralen x-Achse geführt wird.

16. Verfahren nach Anspruch 15, **dadurch gekennzeichnet, dass** eine Polarisation des Referenzstrahls (5) verändert wird.

17. Verfahren nach Anspruch 15 oder 16, **dadurch gekennzeichnet dass** parallel zum Referenzstrahl (5) ein Nutzstrahl (10) auf denselben Strahlteiler (3) gerichtet wird und über die Spiegelelemente (12', 12") gelenkt wird und der Nutzstrahl (10') parallel zum Referenzstrahl (5') aus dem Strahlteiler austritt.

18. Verfahren nach einem der Ansprüche 15 bis 17, **dadurch gekennzeichnet, dass** der Referenzlichtstrahl (5) und der Nutzstrahl (10) von zumindest einem Detektor (7) erfasst werden.
